# EUROPÄISCHE PATENTANMELDUNG

(11) **EP 0 686 500 A2**
(43) Veröffentlichungstag der Anmeldung: **13.12.1995**
(21) Anmeldenummer: 95108023.3
(22) Anmeldetag: 24.05.1995
(51) Int. Cl.: B32B 27/32, B65D 65/40

(54) **Verbundfolie enthaltend auf der Siegelseite zwei Propylen-Copolymerisat-Schichten**

(30) Priorität: 06.06.1994 DE 4419712
(71) Anmelder: WOLFF WALSRODE AG, D-29655 Walsrode (DE)
(72) Erfinder: Kaschel, Gregor, Dr., D-29664 Walsrode (DE); Reiners, Ulrich, Dr., D-29643 Neuenkirchen (DE)
(74) Vertreter: Braun, Rolf, Dr.

(57) **Zusammenfassung**

Die vorliegende Erfindung betrifft eine siegelbare Verbundfolie aus einem Substrat mit einer zweilagigen Siegelschicht, wobei die beiden Siegelschichten aus Propylen-Copolymerisaten, welche bis zu 15 Mol-% weitere α-Olefine mit höchstens 12 C-Atomen enthalten, bestehen, die sich im Gehalt der α-Olefine um mehr als 1 Mol-% unterscheiden.

## Beschreibung

Zahlreiche Produkte sind in Folien abgepackt. Folien erhalten die Produktqualität der Füllgüter über ihren Lagerungszeitraum, sorgen unter anderem für Hygiene und sie sind leicht zu handhaben. Die Verarbeitung auf den Verpackungsmaschinen erfordert häufig Folien, die mit einer Siegelschicht ausgerüstet sind. Der Siegelschicht wird eine große Bedeutung beigemessen, da sie maßgeblich die Verarbeitungsbedingungen auf den Verpackungsmaschinen bestimmt. Normalerweise lassen sich nicht alle an eine Verpackung gestellten Anforderungen durch ein Polymer erfüllen, daher werden Polymere unterschiedlicher Sorten kombiniert. Die Foliendicke kann somit deutlich reduziert werden.

Den Stand der Technik von Folien bezüglich Polymerkombinationen, Eigenschaften und Anwendungen gibt Domininghaus (Hans Dominighaus: Die Kunststoffe und ihre Eigenschaften, VDI-Verlag 1992, Düsseldorf; siehe S. 448) und von zum Beispiel Polyamid enthaltenden Folien Schulte et al. (Kuststoffe 79(1989) 9, S. 818-822). Üblicherweise wird als Siegelschichtmaterial Polyethylen oder Copolymerisate des Ethylens eingesetzt. Der Vorteil einer polyethylenischen Siegelschicht liegt unter anderem in der hohen Flexibilität, die auch bei Temperaturen unterhalb von 0°C beibehalten wird. Weiterhin ermöglichen niedrige Siegeltemperaturen hohe Verarbeitungsgeschwindigkeiten auf Verpackungsmaschinen.

In The Wiley Encyclopedia of Packaging Technology (Hrg. M. Bakker, D. Eckroth; John Wiley & Sons, 1986; siehe S. 451-464) wird der Stand der Technik betreffend mehrschichtiger, flexibler Verpackungen gelistet. Der Einsatz von Polypropylen als Siegelschicht ist demnach auf spezielle Bereiche wie zum Beispiel biaxial orientiertes Polypropylen mit Propylen-Copolymer-Siegelschichten oder sterilisierbare Verpackungen beschränkt. Auf S. 463 wird als ein ausgewähltes Beispiel für flexible Verpackungen der sterilisierbare Beutel mit dem Aufbau Polyester/Haftvermittler/Aluminiumfolie/Haftvermittler/Propylen-Copolymer genannt.

Den Stand der Technik betreffend Barrierefolien gibt Delventhal (Verpackungs-Rundschau 3/1991, Seite 19-23) wieder. Von Barrierefolien spricht man in der Praxis der Lebensmittelverpackung in der Regel dann, wenn die Sauerstoffdurchlässigkeit der Folien kleiner 100 cm³/(m² d bar) und die Wasserdamfbarriere kleiner 10 g/(m² d) ist. Im Artikel werden Beispiele über die Eigenschaften und Anwendungsbereiche von coextrudierten Folien aufgezeigt. Auch hier dominieren Siegelschichten auf Basis von Polyethylen.

Für die Verpackung vorgebackener Baguettes mit Schutzgas, die mit Infrarotstrahlen sterilisiert werden, werden nach Delventhal unverstreckte Folien mit dem Aufbau PA6/EVOH/PA6/Kleber/PP eingesetzt, da die aus Polypropylen bestehende Siegelschicht Temperaturanwendungen bis 130°C und mehr erlaubt. Siegelschichten aus Polypropylen haben allerdings den Nachteil, daß sie auf Grund des Kristallitschmelzbereiches von 160°C bis 168°C im Vergleich zu Polyethylen deutlich höhere Siegeltemperaturen benötigen. Eine weitere nachteilige Eigenschaft von Polypropylen ist die bei Temperaturen um 0°C eintretende Versprödung, die durch Block-Copolyerisation mit Ethylen und/oder Elastifizieren mit thermoplastischen Elastomeren (z.B. Ethylen/Propylen-Dien-Copolymerisate) zu tieferen Temperaturen verschoben werden kann (Domininghaus, S. 125), was aber in der Regel zu einer Eintrübung der Folie führt.

In der australischen Anmeldung AU8776-284-A wird ein 7-schichtiges, thermoformbares, kunststoffhaltiges Laminat für die Verpackung von Lebensmitteln angegeben. Das Laminat enthält eine Mittelschicht aus einem Sauerstoff sperrenden Material, vorzugsweise ein Ethylen/Vinylalkohol-Copolymerisat, zu beiden Seiten der Mittelschicht Schichten aus Polyamid mit kontrollierter Kristallinität, vorzugsweise Polyamid 6, eine Siegelschicht, vorzugsweise ein Ionomer, Polyolefin, Ethylen-α-Olefin-Copolymer oder Blend dieser Stoffe, eine gegen Feuchtigkeit sperrenden Außenschicht, vorzugsweise aus Polypropylen, und Haftvermittlern, vorzugsweise anhydridgepfropfte Polyolefine, zwischen den Polyamid- und Außenschichten. Alle Folienschichten werden in einem Prozeßschritt in einer Düse zusammengeführt. Die Haftvermittler- und Siegelschichten werden vorzugsweise vernetzt und die Folie vorzugsweise in Längsrichtung orientiert. Die so angeführte Folie setzt eine Coextrusionstechnik für 7 Schichten voraus, was einen erheblichen maschinellen Aufwand bedeutet Weiterhin stellt die Vorrichtung zur Vernetzung einiger Folienschichten zusätzliche Anforderungen an die Herstellbedingungen.

In der europäischen Patentanmeldung EP 457-648 wird eine thermoformbare Barrierefolie erwähnt, die aus mindestens 6 Kunststoffschichten besteht. Sie enthält mindestens eine Schicht aus Polyolefinen, mindestens eine Schicht aus Polyamid, mindestens einen coextrudierbaren Haftvermittler und mindestens eine Schicht aus einer Mischung aus Ethylen/Vinylalkohol-Copolymerisat mit Polypropylen und einer haftvermittelnden Komponente. Die Neuheit dieser Folie wird darin gesehen, daß beide Außenschichten aus Polyethylen bestehen und die Polyamidschichten in Kontakt mit der eben genannten Mischung stehen. Die Folie ist dünner als 250 µm, vorzugsweise 180 bis 250 µm dick.

Es stellt sich daher die Aufgabe, eine siegelbare Folie bereitzustellen, die folgenden Anforderungen entspricht:
1. niedriges Flächengewicht:
   Das Flächengewicht gibt das Gewicht einer Folie pro Flächeneinheit wieder, es wird üblicherweise mit g/m² oder kg/m² angegeben. Von Seiten der abpackenden Industrie wird im allgemeinen gefordert, mit einer leichten Verpackung eine definiert große Fläche zu umhüllen. Aus ökologischer und ökonomischer Sicht bedeutet dies für das Verpackungsmaterial ein möglist niedriges Flächengewicht.
2. mechanische Festigkeit:
   Die mechanischen Festigkeiten einer Verpackung werden je nach Anforderungskriterium angegeben. Oft führen harte, scharfe Spitzen des Füllgutes zu einer mechanischen Verletzung der Verpackung, die Haltbarkeit des Inhaltes wird somit drastisch reduziert. In der Vergangenheit hat sich gezeigt, daß die Prüfung der Durchstichfestigkeit ein wichtiges und geeignetes Kriterium bei der Beurteilung von Folien ist.
3. optische Anforderung:
   Die Verpackung darf die Präsentation des Inhaltes nicht nachteilig beeinflußen. In der Regel wird eine transparente Folie gefordert. Der Inhalt muß durch die Folie möglichst naturgetreu zu sehen sein. Hierzu ist ein geeignetes Beurteilungskriterium die Absorption des sichtbaren Lichtes (Trübung).

Die aufgelisteten Kriterien gelten für Folien im Lebensmittelbereich wie für medizinische oder technische Verpackungen. Auch ist die Art der Verpackungsmaschine ohne Einfluß. Es ist unerheblich, ob die Folie zum Beispiel auf einer horizontalen oder vertikalen Schlauchbeutelmaschine, auf einer Form- und Füllstation als Deckel- oder Muldenfolie verarbeitet wird.

Erfindungsgemäß gelang dies durch eine siegelbare Verbundfolie aus einem Substrat mit einer zweilagigen Siegelschicht, wobei die beiden Siegelschichten aus Propylen-Copolymerisaten, welche bis zu 15 Mol-% weitere α-Olefine mit höchstens 12 C-Atomen enthalten, bestehen, die sich im Gehalt der α-Olefine um mehr als 1 Mol-% unterscheiden.

Die Siegelseite enthält zwei Schichten von Propylen-Copolymerisaten, die bis zu 15 Mol-% eines weiteren α-Olefins mit höchstens 12 C-Atomen enthalten, wobei der Gehalt der α-Olefine in beiden Schichten um 1 Mol-% differiert. Vorzugweise wird als α-Olefin Ethylen eingesetzt. Möglich sind aber auch Polymerisate, die neben Propylen und Ethylen weitere α-Olefine enthalten wie zum Beispiel Buten. Die Dichte der Propylen-Copolymerisate liegt vorzugsweise im Bereich von 0,88 bis 0,91 g/cm³ und der Schmelzfließrate MFR(230°C/2,16) vorzugsweise von 1 bis 10g/10min.

Die erfindungsgemäße Verbundfolie kann verschiedenste Substrate enthalten. Als Substrate können zum Beispiel eingesetzt werden Papier, Aluminiumfolie, Zellglas, biaxialorientiertes Polypropylen (BOPP), biaxialorientiertes Polyalkylenterephthalat, gerecktes und ungerecktes Polyamid, Polycarbonat, Polystyrol oder orientiertes Polystyrol, metallisierte Filme sowie Kombinationen aus den genannten Substraten. Alle aufgeführten Substrate können ein- oder mehrschichtig aufgebaut sein. Sie können eingefärbt oder bedruckt sowie auch eingefärbt und bedruckt sein.

Die Verbindung zwischen Substrat und den Propylen-Copolymerisat-Schichten, die die Siegelseite bilden, kann zum einen auf dem Wege der Klebstoffkaschierung, Coextrusion oder Extrusionsbeschichtung oder auf einer Kombination der genannten Fertigungstechniken erfolgen.

Unter dem Begriff Klebstoff wird ein nichtmetallischer Werkstoff verstanden, der zwei Folien durch Oberflächenhaftung und innere Festigkeit (Adhäsion und Kohäsion) verbinden kann, ohne das sich das Gefüge der Folien wesentlich ändert. Klebstoffen können auf Grund ihres Abbindemechanismus unterschieden werden: Zum einen können Klebstoffe ohne chemische Reaktion abbinden, der hochmolekular liebende Stoff ist vor der Klebung vorhanden, und zum anderen können sie über eine chemische Reaktion den klebenden Stoff bilden. Für die Verklebung müssen die Oberflächen mit dem Klebstoff benetzt werden. Bei Polyolefinen ist in der Regel die Benetzung zu verbessern, man kann sie zum Beispiel durch eine Oxidation, wie sie durch eine elektrische Entladung erreicht wird, erhöhen.

Haftvermittler finden bevorzugt in der Coextrusion und Coextiusionsbeschichtung Anwendung. Sie können in diesem Fall die Verbundhaftung zwischen dem Substrat und den Propylen-Copolymerisat-Schichten auf der Siegelseite verbessern. Als Haftvermittler werden vorzugsweise modifizierte Polyolefine eingesetzt. Vorzugsweise sind dies Homo- oder Co-Polyolefine mit Carboxylgruppen wie zum Beispiel Polypropylen oder Polyethylen, die mindestens ein Monomer aus der Gruppe der α,β-einfach ungesättigten Dicarbonsäuren, wie zum Beispiel Maleinsäure, Fumarsäure, Itaconsäure oder deren Säureanhydride, Säureester, Säureamide oder Säureimide aufgepfropft enthalten, Copolymerisate von Ethylen mit α,β-einfach ungesättigten Carbonsäuren, wie Acrylsäure, Methycrylsäure oder aber deren Metallsalzen (Zn, Na) und/oder deren Alkyl(C1-C4)estern oder entsprechende Pfropfpolymere der genannten Monomere auf Polyolefine wie Polyethylen oder Polypropylen oder deren Mischungen.

Es besteht auch die Möglichkeit, die erfindungsgemäße Folie mit einem mindestens monoaxial gereckten Film PA/EVOH/PA zu bilden. Die aus den beiden Propylen-Copolymerisaten bestehenden Siegelschichten können zum Beispiel mittels eines Klebstoffs mit dem gereckten PA/EVOH/PA-Film verbunden werden.

Zur Verbesserung der Konfektionierung können einer oder beiden Deckschichten der Folie übliche Additive zugesetzt werden. Dies sind zum Beispiel organische oder anorganische Antiblockmittel oder aber ein Gleitmittel oder aber Antistatika. Bekannte Antiblockmittel sind beispielsweise anorganische, unverträgliche Polymerisate wie Polyamid, Polyester, Polycarbonat und dergleichen oder anorganische Substanzen wie Siliziumdioxid oder Silicate. Gleitmittel sind beispielsweise Fettalkohole, Fettsäurediamide oder andere Stoffe, wie sie bei *Piringe*r angegeben werden (Otto Piringer: Verpackungen für Lebensmittel, VCH Verlagsgesellschaft 1993, siehe S. 53). Bekannte Antistatika sind nach Domininghaus (S. 23) bei den sogenannten inneren Antistatika ethoxylierte tertiäre Amine von Fettsäuren oder ethoxylierte Glykolester von Fettsäuren oder aber bei den äußeren Antistatika quaternäre Ammoniumsalze von Fettsäuren.

Mindestens eine der angeführten Schichten kann nach Bedarf eingefärbt sein. Die erfindungsgemäßen Folien können auch bedruckt sein. Dies kann auf der Siegelschicht abgewandten Seite und/oder zwischen den Schichten erfolgen. Die Bedruckung einer innerhalb der mehrschichtigen Folie liegenden Schicht kann dann erfolgen, wenn Folien aus unterschiedlichen Fertigungsschritten zusammengefügt werden.

Durch den Einsatz der erfindungsgemäßen Verbundfolie gelingt es bei niedrigem Flächengewicht die mechanischen Festigkeiten und optischen Eigenschaften gegenüber den bislang auf dem Markt befindlichen Folien zu steigern. Die Durchstichfestigkeit der Folie ist deutlich gesteigert worden, dies hat insbesondere für die Verpackung scharfkantiger Füllgüter große Vorteile. Von der Verpackungsmaschine bis zum Kunden bleibt nun die Ware besser geschützt. Da mit der erfindungsgemäßen Folie auch eine sehr niedrige Trübung erreicht werden konnte, kann die Ware optisch besser präsentiert werden.

Es war nicht zu erwarten, daß mit der erfindungsgemäßen Verbundfolie bei reduzierter Dicke die Durchstichfestigkeit gesteigert werden konnte. Bislang konnten die mechanischen Festigkeiten einer Folie nur durch dickere Folien erreicht werden, was allerdings in der Regel Nachteile in der optischen Beurteilung bedingte. Mit der erfindungsgemäßen Siegelschicht ist daher auch unter ökologischen Aspekten ein deutlicher Forstschritt erzielt worden.

Die erfindungsgemäße Verbundfolie eignet sich zur Verpackung von Füllgütern aller Art. Insbesonders eignet sie sich zur Verpackung von Lebensmitteln oder Produkten, die für die Zubereitung von Lebensmitteln benötigt werden. Unter anderem eignen sich Folien dieser Art zur Verpackung von oxidationsempfindlichen Lebensmittels oder Produkten, die mit einer modifizierten Atmosphäre verpackt werden, wenn das Substrat eine Sauerstoff sperrende Schicht enthält.

Die erfindungsgemäße Verbundfolie eignet sich auch zur Verpackung von Infusions- oder Spüllösungen, wie sie im Bereich der medizinischen Versorgung eingesetzt werden. In der Regel wird hier eine mechanisch feste, aber gleichzeitig sehr transparente Folie gefordert.

Die erfindungsgemäße Verbundfolie eignet sich auch für Sterilisationsanwendungen. Die Sterilisationsverfahren und -bedingungen variieren jeweils mit dem Füllgut. Als Beispiel sei hier nur die Verpackung von Fertiggerichten oder Infusionslösungen zur parenteralen Ernährung genannt, die teilweise 20 Minuten bei 121°C im Gegendruckautoklaven sterilisiert werden.

Die erfindungsgemäße Verbundfolie kann auf jeder Art von Verpackungsmaschine eingesetzt werden. Als Beispiele seien hier nur genannt Form-Füll-Siegel-Maschinen, horizontale oder vertikale Schlauchbeutelmaschinen oder Maschinen zur Herstellung von Standbodenbeuteln. Die erfindungsgemäße Verbundfolie eignet sich auch für Tiefziehanwendungen.

Die Herstellung der erfindungsgemäßen Verbundfolie unterliegt keinen Beschränkungen. Vorzugsweise wird die Siegelseite der Verbundfolie auf einer zweischichtigen Flachfolienanlage gefertigt.

Die Siegelseite der erfingungsgemäßen Verbundfolie wird vorzugsweise mittels eines Klebstoffes mit einem geeigneten Substrat kaschiert. Es ist aber auch möglich, die zweischichtige Propylen-Copolymerisat-Siegelschicht in der Extrusionsbeschichtung mit dem Substrat zu verbinden. Hierzu kann es notwendig sein, die Verbundhaftung zum Substrat durch Einsatz eines auf Propylen basierenden Haftvermittlers oder eines Klebstoffes zu erhöhen.

Weiterhin ist es möglich, eine bereits vorgefertigte Propylen-Copolymerisat-Folie mittels eines schmelzeflüssig eingebrachten Propylen-Copolymerisats, daß sich im Gehalt der α-Olefine um mehr als 1 Mol-% von der vorgefertigten Folie unterscheidet, zu Beschichten oder aber mit dem Substrat zu verbinden (Extrusionskaschierung).

Eine Färbung der erfindungsgemäßen Verbundfolie wird vorzugsweise durch entsprechende Farbmasterbatche erreicht, die mit dem Propylen-Copolymerisat in der Schmelze vermischt werden. Es besteht auch die Möglichkeit, ein bereits farbig vorliegendes Substrat für die Verbundfolie zu wählen.

Die Bedruckung der erfindungsgemäßen Verbundfolie erfolgt nach den gängigen Techniken wie zum Beispiel Flexo- oder Tiefdruck auf die der Siegelschicht abgewandte Seite der Folie oder auf eine innerhalb des Folienverbundes liegende Schicht.

Das Flächengewicht der Folien wird wie folgt bestimmt. Aus einer zu messenden Folienbahn wird mit Hilfe einer 100 cm² großen Schablone eine saubere und fehlerfreie Probe geschnitten. Die Probe wird auf einer Analysenwaage auf 1 mg genau ausgewogen. Das Meßergebnis wird in g/m² angegeben. Die Messung erfolgt, wenn nicht anders angegeben, bei einem Raumklima von 23°C und 50% relativer Luftfeuchte.

Die Durchstichprüfung dient der Beurteilung von Folien, die mit spitzen Gegenständen beansprucht werden. Die Durchsticharbeit ist die zum Durchstechen einer membranartig aufgespannten Folie notwendige Arbeit. Es werden aus einem Folienmuster kreisförmige Proben mit dem Durchmesser 80 mm entnommen und membranartig in die Probenhalterung der elektronischen Zugprüfmaschine eingesetzt. Die Probenhalterung besitzt einen freien Durchmesser von 50 mm. Die Durchsticharbeit bestimmt sich aus dem Integral von Kraft mal Weg, die zum Durchstechen der Probe notwendig ist. Sie wird in N*cm angegeben. Der Prüfdorn besitzt an seiner Spitze einen unter 90° abgeschliffenen Kegel mit einem Durchmesser von 1 mm. Die Probe wird mit einer Geschwindigkeit von 100 mm/min durchstochen.

Die Trübung dient dem Vergleich von transparenten Folien. Die Messung erfolgt in % Trübung entsprechend % Haze nach der ASTM Prüfnorm D 1003-61m, Procedure A, nach Kallibrierung des Meßgerätes mit Trübungsnormalen zwischen 0,3 und 34% Trübung (Haze).

### Beispiele und Vergleichsbeispiele

Die ersten drei Schichten der Folie bestehen aus Polyamid 6 (PA6) und Ethylen-Vinylalkohol-Copolymerisat (EVOH) in der Schichtfolge PA6/EVOH/PA6. Der Verbund PA6/EVOH/PA6 in der Schichtdickenaufteilung 27/5/27 µm ist auf einer konventionellen Flachfolienanlage coextrudiert worden. Dabei wird die natürliche Affinität zwischen den Polymeren PA6 und EVOH genutzt, auf eine haftvermittelnde Schicht kann verzichtet werden.

Das Polyamid 6 (PA6) ist ein Standardprodukt, wie es für die Herstellung von Folien üblicher Weise eingesetzt wird. Es hat eine Dichte von 1,14 g/cm³ gemessen nach DIN 53479. Die Schmelztemperatur gemessen nach DIN 3146 Methode C liegt zwischen 217°C und 221°C. Die Viskositätszahl gemessen in 96%-iger Schwefelsäure liegt zwischen 200 und 220 ml/g gemessen nach DIN 53727 bei einer PA-Konzentration von 5 g/l. Das Polyamid ist nukleiert.

Das Ethylen/Vinyl-Copolymerisat ist ein Standardprodukt, wie es für die Herstellung von Folien üblicher Weise eingesetzt wird. Es enthält ca. 68 Mol-% Vinylacetat, die zu mindestens 90% verseift sind. Die Schmelzfließrate MFR liegt bei 1,3 g/10 min gemessen nach ISO 1133 bei 190°C und einem Auflagegewicht von 2,16 kg. Die Dichte des EVOH beträgt 1,19 g/cm³ gemessen nach ASTM D 1505.

Der so hergestellte PA6/EVOH/PA6 - Verbund ist Grundlage für das vorgestellte Beispiel und die Vergleichsbeispiele. Alle weiteren Schichten der Folie werden mittels eines stickstoffbasierenden Klebstoffsystems (Kl) mit dem Film PA6/EVOH/PA6 verbunden. Die Folienaufbauten sind so gewählt, daß der Aufbau PA6/EVOH/PA6/Kl im Beispiel und in allen Vergleichsbeispielen gleich bleibt. Somit ist der Einfluß des PA6/EVOH/PA6/Kl - Verbundes in allen Fällen derselbe.

Die in den Beispielen genannten, polyolefinischen Schichten sind auf konventionellen, mehrschichtigen Blas- oder Flachfolienanlagen hergestellt worden. Alle genannten Polymere sind kommerziell erhältliche Handelsprodukte. Die angegeben Dichten sind entsprechend ISO 1183 bei 23°C und die Schmelzfließraten MFR entsprechend ISO 1133 bestimmt worden, wobei die zuerstgenannte Zahl in der Klammer die Temperatur und die zweitgenannte Zahl das Auflagegewicht kennzeichnet.

### Beispiel 1

| Folienaufbau: | | | | | | |
|---|---|---|---|---|---|---|
| PA6 | EVOH | PA6 | Kl | E/P-1 | E/P-2 | |
| 27 | 5 | 27 | ca.1 | 13 | 37 | µm |

Die Schicht (E/P-2) ist zusammen mit einer zweiten Schicht aus einem statistischen Propylen/Ethylen-Copolymerisats (E/P-1) auf einer Flachfolienanlage coextrudiert worden. Das statistische Propylen/Ethylen-Copolymerisat E/P-1 enthält ca. 8 Mol-% Ethylen. Die Dichte von E/P-1 liegt bei 0,9 g/cm³. Die Schmelzfließrate MFR (230°C/2,16) von E/P-1 liegt bei 8 g/10 min. Die mittels DSC bestimmte Schmelztemperatur liegt bei ca. 138°C.

Das statistische Propylen/Ethylen-Copolymerisat E/P-2 bildet die außen liegende Lage der Siegelschicht. Es enthält ca. 5 Mol-% Ethylen. Die Dichte von E/P-2 liegt bei 0,895 g/cm³. Die Schmelzfließrate MFR (230°C/2,16) von E/P-2 liegt bei 5 g/10 min. Der mittels DSC bestimmte Peak in der Schmelztemperatur liegt bei 137°C gemessen nach ASTM D3418. Das Propylen/Ethylen-Copolymerisat E/P-2 enthält Antiblockmittel (1000 ppm SiO₂).

### Vergleichbeispiel 2

| Folienaufbau: | | | | | |
|---|---|---|---|---|---|
| PA6 | EVOH | PA6 | Kl | E/P-3 | |
| 27 | 5 | 27 | ca.1 | 75 | µm |

Das Vergleichsbeispiel 2 enthält eine 75 µm dicke Siegelschicht. Die Siegelschicht besteht aus dem statistischem Propylen/Ethylen-Copolymerisat E/P-3; sie wurde als Flachfolie gefertigt. Die Schmelzfließrate MFR (230°C/2,16) von E/P-3 liegt bei ca. 8 g/10 min. Die Dichte der Propylen/Ethylen-Copolymerisat Folie liegt bei 0,905 g/cm³; sie enthält Gleit- und Antiblockmittel (1000 ppm Ölsäureamid und 1000 ppm SiO₂). Die Siegeltemperatur der E/P-3 Folie beginnt bei 130 °C.

### Vergleichbeispiel 3

| Folienaufbau: | | | | | | |
|---|---|---|---|---|---|---|
| PA6 | EVOH | PA6 | Kl | PE-1 (PE-2 + PE-3) | | |
| 27 | 5 | 27 | ca.1 | 60 | 40 | µm |

Beim Vergleichsbeispiel 3 ist die Siegelseite der Folie aus zwei Schichten basierend auf Polyethylen zusammengesetzt. Die 60 µm dicke Schicht PE-1 besteht aus einem Polyethylen niedriger Dichte (0,915 g/cm³) mit einer Schmelzfließrate MFR (190°C/2,16) von 8 g/10min. Das Polyethylen der Schicht PE-1 wird über eine Extrusionsbeschichtung schmelzeflüssig mit dem Film (PE-2 + PE-3) verbunden.

(PE-2 + PE-3) charakterisiert einen 40 µm dicken Blasfilm, der zu 50 Gew.-% aus einem Polyethylen niedriger Dichte PE-2 und zu 50 Gew.-% aus einem linearen Polyethylen niedriger Dichte PE-3 besteht. Das Polyethylen PE-2 hat eine Dichte von 0,923 g/cm³, eine Schmelzfließrate MFR (190°C/2,16) von 2 g/10 min und eine Vicaterweichungstemperatur (gemessen nach ASTM D1525) von 95.5°C. Das Polyethylen PE-3 enthält als Comonomer Buten-1; es hat eine Dichte von 0,919 g/cm³, eine Schmelzfließrate MFR (190°C/2,16) von 0,7 g/10 min und eine Vicaterweichungstemperatur (gemessen nach ASTM D1525) von 122°C. Der Blasfilm (PE-2 + PE-3) enthält Gleit- und Antiblockmittel (350 ppm Erucasäureamid und 900 ppm SiO₂).

### Vergleichbeispiel 4

| Folienaufbau: | | | | | |
|---|---|---|---|---|---|
| PA6 | EVOH | PA6 | Kl (PE-2 + PE-3) | | |
| 27 | 5 | 27 | ca.1 | 120 | µm |

Das Vergleichsbeispiel 4 enthält eine Siegelschicht bestehend aus Polyethylen. Die Siegelschicht (PE-2 + PE-3) entspricht dem im Vergleichsbeispiel 3 erwähnten Blasfilm (PE-2 + PE-3), sie unterscheidet sich lediglich in der Dicke.

Bei allen Mustern sind entsprechend der oben aufgeführten Prüfvorschriften das Flächengewicht, die Sauerstoff- und Wasserdampfdurchlässigkeit, die Durchstichfestigkeit und die Trübung bestimmt worden. Die Durchlässigkeit der Folien liegt bei allen Mustern im Bereich kleiner 1 cm³/(m² d bar) für Sauerstoff sowie kleiner 1 g/(m² d) für die Wasserdampf. Alle Muster sind daher entsprechend der Definition von Delventhal als Barrierefolien einzustufen. Überraschend ist, daß das dünnste Muster (Beispiel 1) mit dem niedrigsten Flächengewicht die geringste Trübung und gleichzeitig die größte Durchstichfestigkeit aufweist.

| Bezeichnung | Flächengewicht kg/m² | Durchstich -festigkeit N*cm | Trübung % |
|---|---|---|---|
| Beispiel 1 | 0,115 | 6,2 | 5,9 |
| Vergleichsbeispiel 2 | 0,138 | 5,2 | 7,9 |
| Vergleichsbeispiel 3 | 0,163 | 3,8 | 13 |
| Vergleichsbeispiel 4 | 0,183 | 3,2 | 16 |

## Patentansprüche

1. Siegelbare Verbundfolie aus einem Substrat mit einer zweilagigen Siegelschicht, wobei die beiden Siegelschichten aus Propylen-Copolymerisaten, welche bis zu 15 Mol-% weitere α-Olefine mit höchstens 12 C-Atomen enthalten, bestehen, die sich im Gehalt der α-Olefine um mehr als 1 Mol-% unterscheiden.

2. Verbundfolie nach Anspruch 1, dadurch gekennzeichnet, daß die Propylen-Copolymerisate als α-Olefine vorzugsweise Ethylen oder aber Ethylen und Buten enthalten.

3. Verbundfolie nach mindestens einem der vorgehenden Ansprüche 1 bis 2, dadurch gekennzeichnet, daß das Substrat aus Papier, Aluminiumfolie, Zellglas, biaxialorientiertem Polypropylen, biaxialorientiertem Polyalkylenterephthalat, gerecktem und ungerecktem Polyamid, Polycarbonat, Polystyrol oder orientiertem Polystyrol, metallisierten Filmen sowie Kombinationen daraus besteht.

4. Verbundfolie nach mindestens einem der vorgehenden Ansprüche 1 bis 3, dadurch gekennzeichnet, daß die der Siegelschicht abgewandte Seite und/oder eine weitere Schicht der Verbundfolie bedruckt ist.

5. Verbundfolie nach mindestens einem der vorgehenden Ansprüche 1 bis 4, dadurch gekennzeichnet, daß die zweilagige Siegelschicht oder das Substrat eingefärbt ist.

6. Verwendung der Verbundfolie gemäß mindestens eines der vorgehenden Ansprüche 1 bis 5 zur Verpackung von Lebensmittels, medizinischen Infusions- oder Spüllösungen.

7. Verwendung der Verbundfolie gemäß mindestens eines der vorgehenden Ansprüche 1 bis 5 zur Verpackung von Produkten mit einer modifizierten Atmosphäre.
